# EUROPÄISCHE PATENTSCHRIFT

(11) **EP 0 940 179 B1**
(45) Veröffentlichungstag und Bekanntmachung des Hinweises auf die Patenterteilung: **07.05.2003**
(21) Anmeldenummer: 98810192.9
(22) Anmeldetag: 06.03.1998
(51) Int. Cl.: B01L 3/00, F16L 49/00, F16L 21/06

(54) **Verbindungselement zum Verbinden benachbarter Anschlusselemente an Rohren und/oder Behältermündungen, insbesondere an Laborgeräten**
Linking device for the connection of adjacent elements of pipes or containers, particularly for laboratory equipment
Dispositif de connexion d'éléments adjacents de conduits ou de recipients, notamment pour materiel de laboratoire

(43) Veröffentlichungstag der Anmeldung: 08.09.1999
(73) Patentinhaber: Büchi Labortechnik AG, CH-9230 Flawil (CH)
(72) Erfinder: Widmer, Richard, 9200 Gossau (CH); Sanwald, Marco, 9200 Gossau (CH)
(74) Vertreter: Hepp, Dieter

(56) Entgegenhaltungen:
- EP-A- 0 180 656
- CH-A- 614 905
- DE-A- 1 600 403
- DE-A- 2 655 959
- FR-A- 2 232 728
- US-A- 3 910 610
- US-A- 4 381 020

## Beschreibung

Die Erfindung betrifft ein Verbindungselement zum Verbinden benachbarter Anschlussabschnitte an Rohren und/oder Behältermündungen, insbesondere an Laborgeräten, gemäss dem Oberbegriff von Anspruch 1. Diese Verbindungselemente müssen die Anschlussabschnitte weitgehend flüssigkeitsdicht und/oder gasdicht zusammenhalten, wobei insbesondere an labortechnischen Versuchsaufbauten eine rasche und einfache Lösbarkeit erforderlich ist. Die Anschlussabschnitte haben in vielen Fällen einen Kugelschliff, so dass eine axiale Abweichung in alle Richtungen in einem begrenzten Ausmass möglich ist. Die Verbindungselemente werden daher auch Flexverbindung genannt.

Bekannte Verbindungselemente sind in der Regel als konventionelle Flanschverbindung mit losen Flanschen ausgebildet, deren Anbringung jedoch je nach Beschaffenheit des Anschlussabschnitts schwierig ist. Bei den Verbindungselementen handelt es sich um Verschraubungen, die jedoch zum Trennen der beiden Anschlussabschnitte vollständig gelöst werden müssen. Dies ist zeitaufwendig und kann nur mit beiden Händen ausgeführt werden, so dass eine Bedienungsperson keine freie Hand mehr zum Festhalten beispielsweise eines zu lösenden Glaskolbens hat.

Aus der US 3,910,610 ist es zum Abdichten von Lecks an Rohrverbindungen bekannt, ein Verbindungselement mit zwei Haltemanchetten einzusetzen, welche je aus zwei voneinander trennbaren Segmenten bestehen. Die voneinander trennbaren Segmenten sind identisch ausgebildet und weisen ineinander eingreifende Endabschnitte auf. Eine einfache Lösung der Verbindung ist mit einer solchen Konstruktion aufgrund des Eingriffs nicht möglich.

Aus CH-614 905 ist eine Spannklammer bekannt. Die Spannklammer besteht aus Spannbögen, die paarweise an ihrem einen Ende gelenkig und an ihrem anderen Ende mittels eines Schnellverschlusses miteinander verbunden sind. Die Spannklammern bestehen je aus zwei Spannbögen, die paarweise mit zwei Stellschrauben miteinander verbunden sind.

Es ist daher eine Aufgabe der Erfindung, ein Verbindungselement der eingangs genannten Art zu schaffen, das kostengünstig herzustellen ist und das leicht und möglichst mit einer Hand bedient werden kann, ohne dass die Sicherheit der Verbindung dadurch beeinträchtigt wird. Diese Aufgabe wird erfindungsgemäss mit einem Verbindungslement gelöst, das die Merkmale im Anspruch 1 aufweist. Die Befestigungselemente verbinden gleichzeitig die trennbaren Segmente und die Haltemanschetten derart, dass durch Lösen eines einzigen Befestigungselements eine der Haltemanschetten soweit geöffnet werden kann, dass die Anschlussabschnitte voneinander getrennt werden können.

Vorteilhaft weisen benachbarte Segmente sich gegenseitig überlappende Endabschnitte auf, welche mit je einer Oeffnung zum Ansetzen der Befestigungselemente versehen sind, wobei die Oeffnungen sich überlappender Endabschnitte im geschlossenen Zustand deckungsgleich verlaufen. Damit wird eine relativ schlanke Bauweise ohne vorstehenden Teile erreicht und die geschlossenen Segmente bilden insgesamt eine kompakte Einheit.

Die Befestigungselemente sind vorzugsweise Schraubenbolzen, welche die Haltemanschetten durchdringen und welche wenigstens mit einer Schraubenmutter versehen sind. Alternative Befestigungselemente wären aber denkbar, wie z.B. Zugfedern, Klammern oder dergleichen.

Wenn auf wenigstens einem Schraubenbolzen zwischen den Haltemanschetten eine Schraubendruckfeder gelagert ist, werden die beiden Haltemanschetten auseinandergespannt, so dass sie beim Lösevorgang nicht zusammenfallen. Dies erleichtert das Ansetzen, bzw. Entfernen an den Anschlussabschnitten.

Zusätzlich kann zwischen dem Schraubenkopf oder der Schraubenmutter eines Schraubenbolzens und einer Haltemanschette eine weitere Schraubendruckfeder gelagert sein. Das Anziehen der Verschraubung erfolgt dabei gegen die Federkraft, wodurch unter anderem auch übermässige Druckkräfte verhindert werden. Zum Erzielen einer derartigen Pufferwirkung könnten anstelle einer Schraubendruckfeder aber auch andere Federelemente wie z.B. Federscheiben oder dergleichen verwendet werden. Es wäre auch denkbar, derartige Elemente unmittelbar in den Schraubenkopf oder in die Schraubenmutter zu integrieren.

Eine besonders einfache Handhabung des Verbindungselements kann dadurch erreicht werden, dass die Oeffnungen in den sich überlappenden Endabschnitten radial gegen aussen hin durchgehend ausgebildet sind und dass die Schraubenbolzen ohne vollständiges Lösen der Verschraubung seitlich ausführbar sind. Die Muttern bleiben somit stets auf den Schraubenbolzen und müssen lediglich soweit gelöst werden, dass der Schraubenbolzen seitlich aus der U-förmigen Oeffnung ausgefahren werden kann. Das in der Regel aus Platzgründen meist schwierige axiale Herausziehen der Schraubenbolzen ist somit nicht mehr nötig.

Weitere Vorteile können erreicht werden, wenn die sich überlappenden Endabschnitte derart gelenkartig ineinandergreifen, dass sie nach dem Ausführen des gegenüberliegenden Schraubenbolzens um die Achse des verbleibenden Schraubenbolzens aufschwenkbar sind. Der verbleibende Schraubenbolzen bildet dabei praktisch eine Gelenkachse, wobei die Gelenkfunktion durch die besondere Form der Endabschnitte als Gelenkkopf, bzw. Gelenkpfanne unterstützt wird. Eine vollständige Demontage der Haltemanschette ist praktisch nur zu Reinigungszwecken erforderlich. Zum Einführen und Ausführen eines Anschlussabschnitts genügt das einseitige Oeffnen und Aufschwenken der Segmente.

Wenn die sich überlappenden Endabschnitte im Bereich der Oeffnung auf der Aussenseite und/oder auf der Innenseite mit einer Senkbohrung versehen sind, kann sich darin auf der Aussenseite ein Schraubenkopf oder eine Schraubenmutter und auf der Innenseite beispielsweise eine Schraubendruckfeder abstützen. Die Senkbohrung hat dabei einen grösseren Durchmesser als die Breite der nach aussen führenden Oeffnung, die in der Regal der Breite des Schraubenbolzens entspricht. Dadurch wird bei angezogener Verschraubung infolge der Abstützung in der Senkbohrung verhindert, dass der Schraubenbolzen seitlich herausgezogen werden kann.

Aus herstellungstechnischen Gründen ist es besonders zweckmässig, wenn die Endabschnitte eines einzelnen Segments derart gegensinnig symmetrisch ausgebildet sind, dass identische, aber seitenverkehrt zusammengefügte Segmente mit ihren überlappenden Endabschnitten formschlüssig zusammenpassen. Eine Haltemanschette setzt sich somit aus vollständig identischen Segmenten zusammen, die lediglich umgedreht werden müssen, um formschlüssig zusammenzupassen.

Bei grösseren Durchmessern an den Anschlussabschnitten kann es zweckmässig sein, wenn die Haltemanschette drei vorzugsweise identisch ausgebildete Segmente aufweist, welche durch drei Befestigungselemente zusammengehalten sind. Damit wird vermieden, dass die Segmente übermässig stark aufgeschwenkt werden müssen, um ein Ausfahren der Anschlussabschnitte zu ermöglichen. Auch bei drei Segmenten genügt es jedoch, wenn lediglich ein einziges Befestigungselement entfernt wird, um die Segmente an einer Stelle aufzuschwenken.

Im Normalfall weist das Verbindungselement zwei identisch ausgebildete Haltemanschetten auf. Je nach Konfiguration der zu verbindenden Anschlussabschnitte können die Haltemanschetten aber auch unterschiedliche Formen haben. Die Segmente der Haltemanschetten können aus Kunststoffmaterial, Metall oder in bestimmten Fällen auch aus keramischen Werkstoffen gefertigt sein.

In bestimmten Anwendungsfällen ist es denkbar, dass das Verbindungslement nur eine Haltemanschette mit trennbaren Segmenten aufweist und dass das Widerlager für die Befestiungselemente ein starres Widerlagerelement ist. Ein derartiges Widerlagerlement könnte beispielsweise fest oder lösbar an einem Laborgerät angeordnet sein, an welches ein Rohrstutzen angeschlossen werden kann.

Weitere Einzelmerkmale und Vorteile der Erfindung ergeben sich aus der nachfolgenden Beschreibung von Ausführungsbeispielen und aus den Zeichnungen. Es zeigen:
- Fig. 1: Eine perspektivische Darstellung eines Verbindungselements mit je zwei Segmenten im geöffneten Zustand,
- Fig. 2: das Verbindungselement gemäss Figur 1 im geschlossenen Zustand,
- Fig. 3: eine Seitenansicht auf das geöffnete Verbindungselement gemäss Figur 1,
- Fig. 4: eine Draufsicht auf das Verbindungselement gemäss Figur 3,
- Fig. 5: das Verbindungselement gemäss Figur 1 aus einer etwas anderen Perspektive,
- Fig. 6: eine Seitenansicht auf das geschlossene Verbindungselement gemäss Figur 1,
- Fig. 7: eine Draufsicht auf das Verbindungselement gemäss Figur 6,
- Fig. 8: das geschlossene Verbindungselement gemäss Figur 2 aus einer etwas anderen Perspektive,
- Fig. 9: eine perspektivische Darstellung auf ein Verbindungselement mit drei Segmenten im geöffneten Zustand,
- Fig. 10: das Verbindungselement gemäss Figur 9 im geschlossenen Zustand,
- Fig. 11: eine Seitenansicht des geöffneten Verbindungselements gemäss Figur 9,
- Fig. 12: eine Draufsicht auf das Verbindungselement gemäss Figur 11,
- Fig. 13: das geöffnete Verbindungselement gemäss Figur 9 aus einer etwas anderen Perspektive,

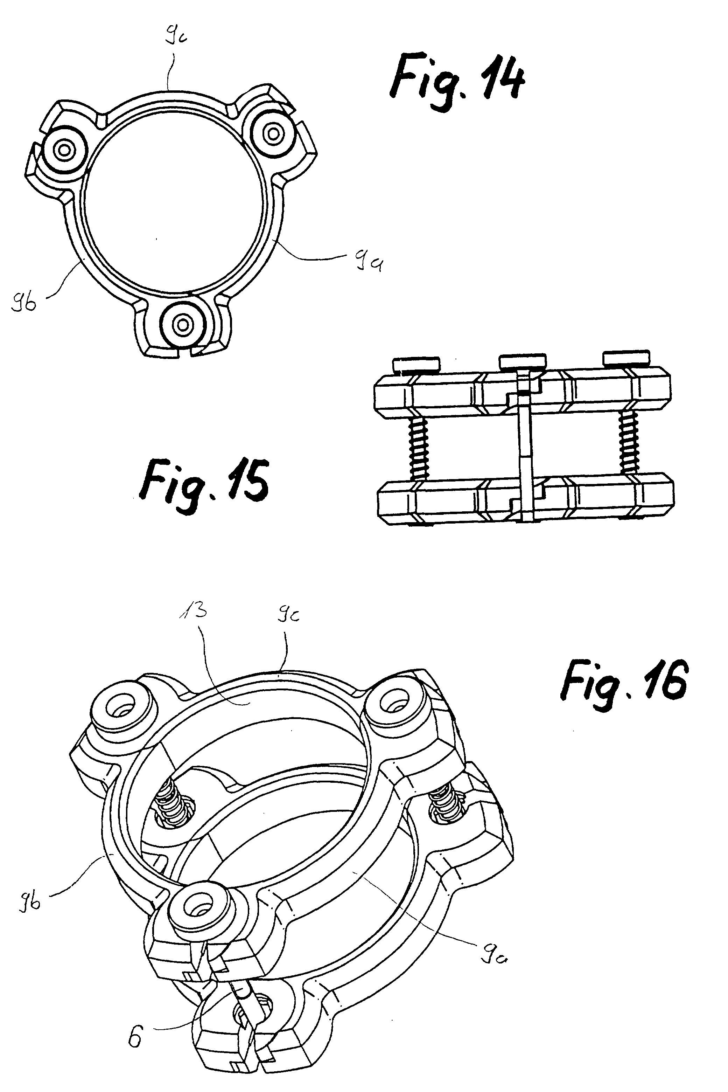

- Fig. 14: eine Draufsicht auf das geschlossene Verbindungselement gemäss Figur 10,
- Fig. 15: eine Seitenansicht des Verbindungselements gemäss Figur 14,
- Fig. 16: das geschlossene Verbindungselement gemäss Figur 10 aus einer etwas anderen Perspektive, und
- Fig. 17: eine perspektivische Darstellung eines Verbindungselements mit nur einer Haltemanschette mit trennbaren Segmenten.

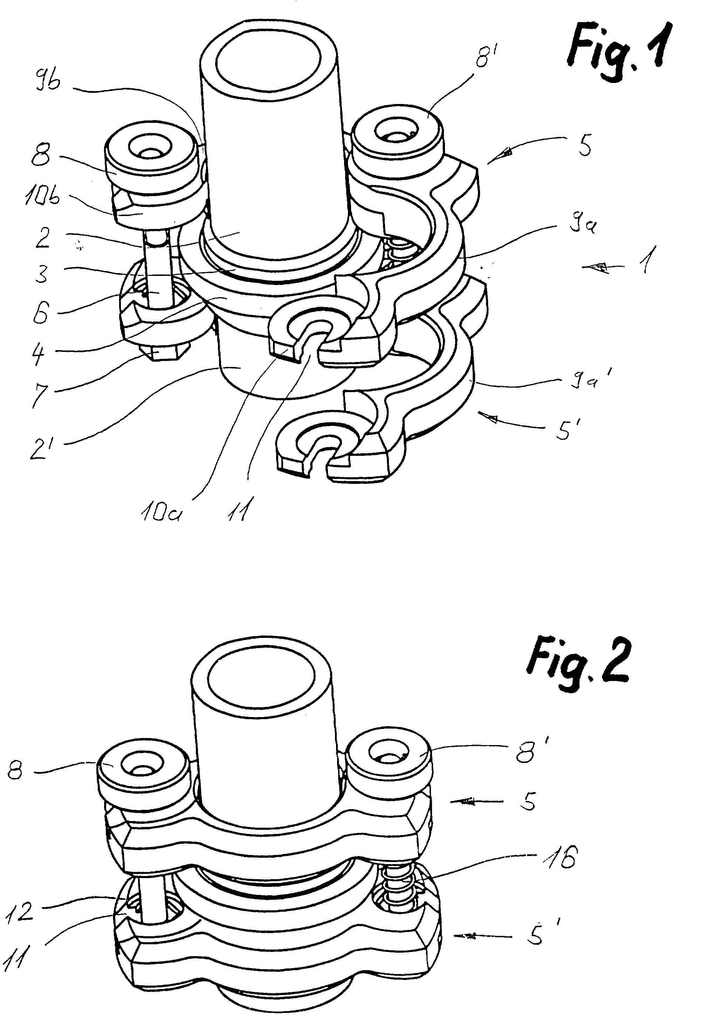

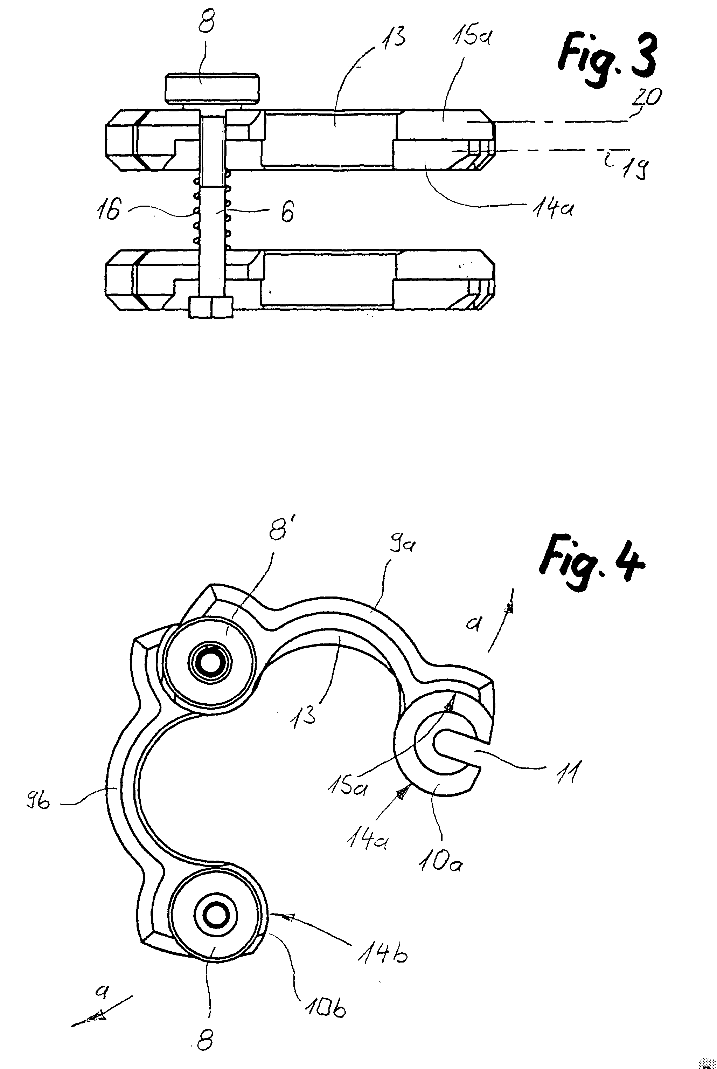

Die Figuren 1 und 2 zeigen zunächst ein Verbindungselement 1 mit zwei Haltemanschetten 5, 5' bestehend aus je zwei Segmenten 9a, 9b, bzw. 9a', 9b', das in den Figuren 3 bis 8 ohne Anschlussabschnitte noch genauer dargestellt ist. Die zu verbindenden Anschlussabschnitte 2, 2' können beispielsweise Glasrohre einer Laborinstallation sein. Der Anschlussabschnitt 2 ist dabei mit einem Kugelkopf 3 und der Anschlussabschnitt 2' mit einer Kugelpfanne 4 versehen. Die beiden Anschlussabschnitte bilden dabei eine Art Kugelgelenk, was eine beschränkte Abwinklung in alle Richtungen ermöglicht.

Die beiden Haltemanschetten 5 und 5' sind völlig identisch ausgebildet, so dass anschliessend jeweils nur eine Haltemanschette beschrieben wird. Eine Haltemanschette besteht aus zwei Segmenten 9a, 9b, von denen jedes etwa 180° eines Anschlussabschnitts umfasst. Die Segmente sind mit sich überlappenden Endabschnitten 10a, 10b versehen. In jedem Endabschnitt ist eine Oeffnung 11 angeordnet, die sich jedoch wie ein U-förmiger Schlitz radial bis zur Aussenseite erstreckt.

Die beiden Haltemanschetten 5, 5' werden mit zwei Schraubenbolzen 6 zusammengehalten, welche in die Oeffnungen 11 eingeführt sind und welche einen Schraubenkopf 7 und eine Mutter 8 aufweisen. Zum Ansetzen des Verbindungselements werden die Segmente 9a und 9b soweit aufgeschwenkt, bis sie über die Anschlussabschnitte geschoben werden können. Dann werden die Segmente zusammengeklappt, was aufgrund des Verlaufs der Oeffnungen 11 nur möglich ist, wenn der betreffende Schraubenbolzen entfernt wird. Anschliessend werden die Muttern 8 soweit angezogen, bis die nötige Druckkraft für eine dichtende Verbindung an den Anschlussabschnitten 2, 2' erreicht ist.

Aus Figur 2 ist ersichtlich, dass auf einem der beiden Schraubenbolzen eine Schraubendruckfeder 16 zwischen den beiden Haltemanschetten 5, 5' angeordnet ist. Diese sorgt dafür, dass die Haltemanschetten stets auf die richtige Distanz auseinandergespannt werden. In Figur 2 ist ausserdem im Bereich der Oeffnung 11 eine Senkbohrung 12 auf der Innenseite sichtbar. Eine identische Senkbohrung ist jedoch auch auf der Aussenseite angeordnet, so dass der Schraubenkopf 7, bzw. ein nicht näher dargestellter Hals der Mutter 8 teilweise darin versenkt ist. Die Senkbohrung auf der Innenseite dient zur Aufnahme der Enden der Schraubendruckfeder 16. Bei gespannter Schraubendruckfeder, bzw. bei angezogener Verschraubung kann damit ersichtlicherweise der Schraubenbolzen nicht seitlich herausgezogen werden.

Aus den Figuren 3 und 4 sind weitere Einzelheiten der Endabschnitte 10a, 10b ersichtlich. Diese sind praktisch als doppelseitige Gelenklager ausgebildet, wobei jeder Endabschnitt einen kreisbogenförmigen Lagerkopf 14a und eine kreisbogenförmige Lagerpfanne 15a aufweist, wobei der Kreisbogen von Lagerkopf und Lagerpfanne den gleichen Durchmesser aufweist. An jedem Segment sind Lagerkopf und Lagerpfanne an den Endabschnitten jeweils gegensinnig symmetrisch ausgebildet. Das heisst, dass auf einer ersten Ebene 19 an einem Endabschnitt der Lagerkopf und am anderen Endabschnitt die Lagerpfanne angeordnet ist und auf der benachbarten Ebene 20 verhält es sich umgekehrt. An identischen, jedoch seitenverkehrt zusammengefügten Segmenten ergibt sich dabei ersichtlicherweise ein hermaphroditisches Ineinandergreifen benachbarter Endabschnitte, wobei ein Drehgelenk gebildet wird, das ein Aufschwenken der Segmente in Pfeilrichtung a ermöglicht. Das Zentrum der Kreisbogen von Lagerkopf 14a und Lagerpfanne 15a entspricht dem Zentrum des Schraubenbolzens 6 im geschlossenen Zustand. Die U-förmigen Oeffnungen 11 verdrehen sich beim Aufschwenken zwar gegeneinander, doch bleibt die Oeffnung für den Schraubenbolzen stets bestehen.

Die Innenwand 13 eines Segments 9a oder 9b ist ebenfalls kreisbogenförmig ausgebildet, wobei der Radius etwas grösser ist, als der Radius des zu umgreifenden Anschlussabschnitts. Auf diese Weise kann der Anschlussabschnitt bei angesetztem und angezogenem Verbindungselement noch eine beschränkte Kippbewegung ausführen.

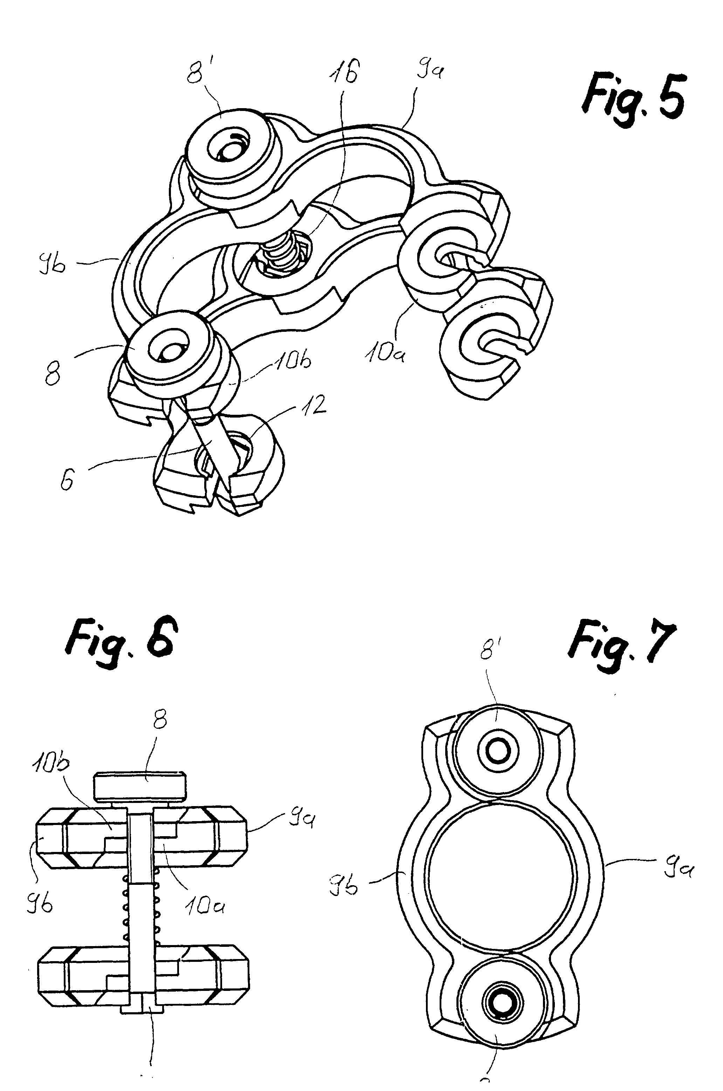

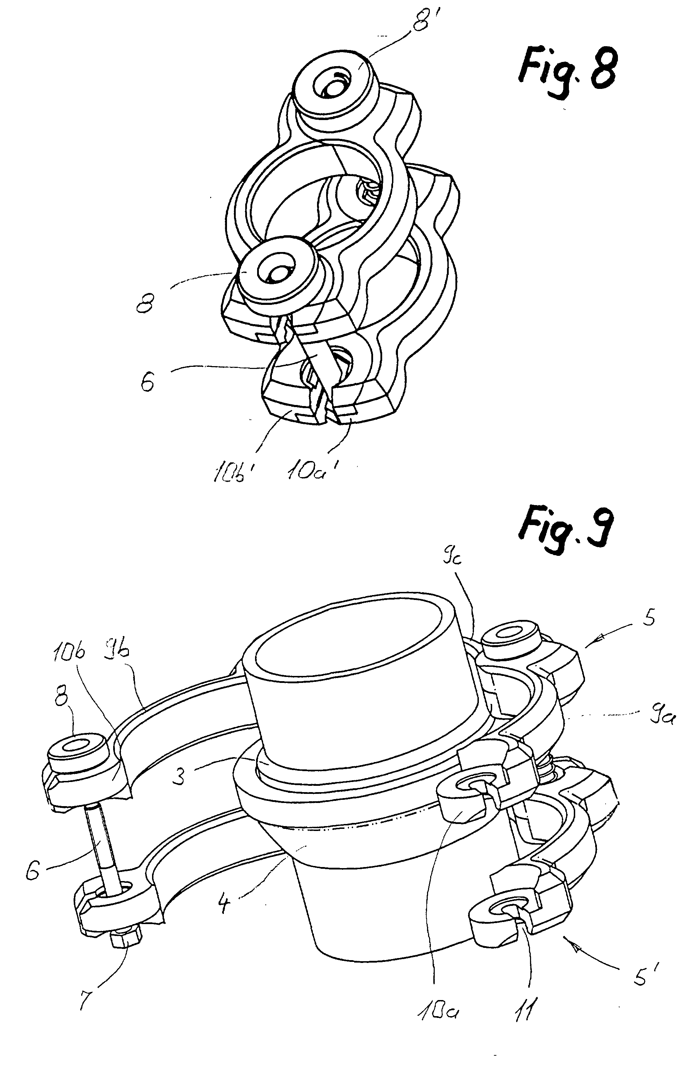

Die Figuren 5 bis 8 zeigen weitere Ansichten des beschriebenen Verbindungselements. In der Darstellung des geöffneten Zustands gemäss Figur 5 sind beide Haltemanschetten geöffnet und beide Schraubenbolzen in ihrer eingesetzten Lage dargestellt. In der Praxis wird jedoch in den meisten Fällen zum Lösen der Verbindung nur die Oeffnung einer Haltemanschette erforderlich sein. Dazu wird beispielsweise bei der Anordnung gemäss Figur 5, bzw. gemäss Figur 8 der Schraubenbolzen 6 ohne Schraubendruckfeder an der Mutter 8 soweit gelöst, dass er seitlich aus der in der Darstellung oberen Haltemanschette herausgekippt werden kann. Die Mutter 8' kann dabei gebgebenenfalls ebenfalls gelöst werden, wobei die Schraubendruckfeder dafür sorgt, dass die beiden Haltemanschetten auseinandergespannt werden und dass der Schraubenbolzen in seiner Position verbleibt.

In Figur 6 ist das Ineinandergreifen der Endabschnitte 10a und 10b im geschlossenen Zustand besonders deutlich sichtbar.

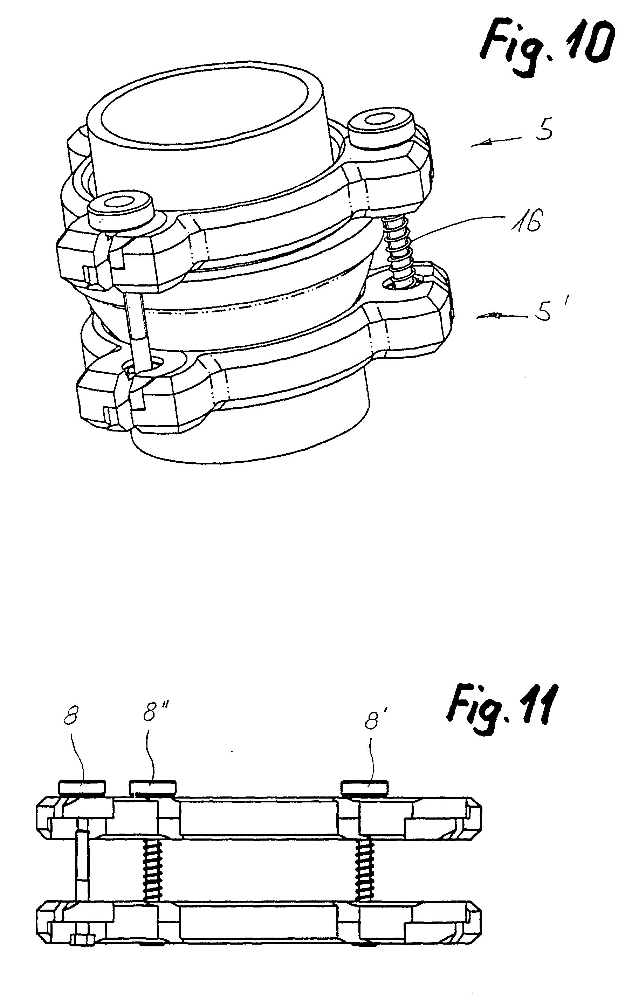

Die Figuren 9 bis 13 betreffen ein Ausführungsbeispiel eines Verbindungselements mit zwei Haltemanschetten, jedoch mit je drei Segmenten 9a, 9b, 9c und mit drei Schraubenbolzen 6. Die Segmente bilden jeweils mit ihrer Innenwand 13 ebenfalls einen Kreis, wobei jedes Segment einen Abschnitt von 120° abdeckt.

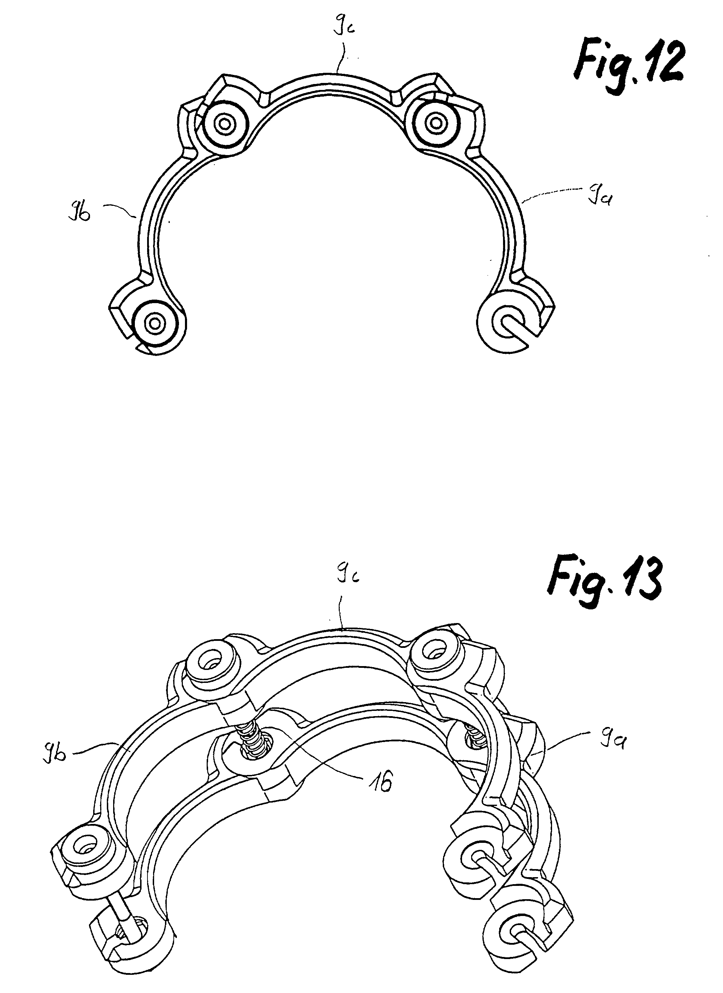

Von den insgesamt drei Schraubenbolzen sind lediglich zwei mit einer Schraubendruckfeder 16 versehen. Es handelt sich dabei wie aus den Figuren 12 und 13 ersichtlich ist, um diejenigen Schraubenbolzen, welche beim Oeffnen in ihrer Position verbleiben und das Gelenklager bilden. Zum Oeffnen wird der Schraubenbolzen 6 ohne Schraubendruckfeder entweder ganz seitlich herausgezogen, oder aber vorzugsweise zum Oeffnen einer Haltemanschette nur auf einer Seite herausgekippt.

Alle übrigen Konstruktionselemente sind gleich wie beim Ausführungsbeispiel gemäss den Figuren 1 bis 8 und werden daher nicht nochmals im Detail beschrieben. Dies gilt insbesondere auch für die Konfiguration der Endabschnitte 10a, 10b, usw. Auch bei dieser Ausführungsform sind somit sämtliche Einzelsegmente völlig identisch ausgebildet und für das formschlüssige Zusammenfügen müssen Sie lediglich seitenverkehrt aneinander angeschlossen werden.

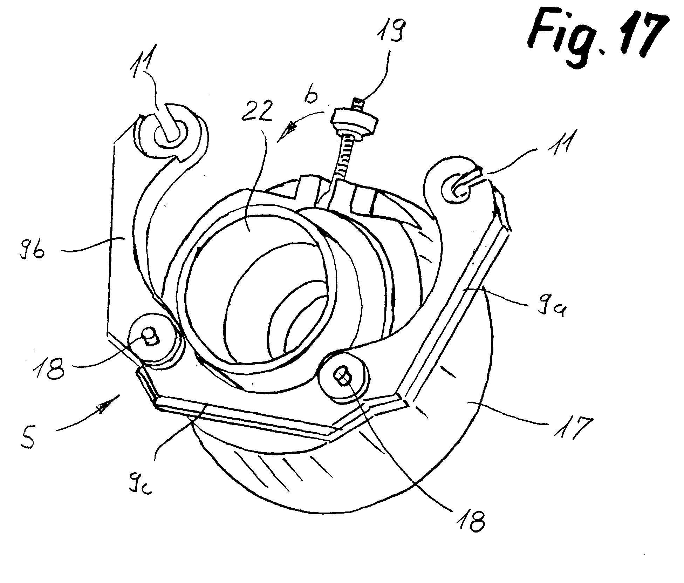

Figur 17 zeigt ein alternatives Ausführungsbeispiel der Erfindung, bei dem das Verbindungselement nur eine einzige Haltemanschette 5 bestehend aus drei Segmenten 9a, 9b, 9c aufweist. Anstelle einer zweiten Haltemanschette ist ein Widerlagerelement 17 vorgesehen, das direkt Bestandteil eines Laborgeräts, wie z.B. einer Pumpe, einer Kolbenhalsdurchführung an einem Rotationsverdampfer, usw. sein kann. Die Schraubenbolzen 18 sind fest an diesem Widerlagerelement verankert. Der Schraubenbolzen 19 ist gelenkig im Widerlagerelement gelagert und kann in Pfeilrichtung b eingeschwenkt werden, so dass er in die Oeffnungen 11 der beiden Segmente 9a und 9b eingreift. Diese Segmente umschliessen beispielsweise einen Rohrstutzen 22, der auf diese Weise dichtend gegen das Widerlagerelement 17 gepresst wird. Selbstverständlich kann auch hier zu Reinigungszwecken das ganze Verbindungselement vollständig demontiert werden.

## Patentansprüche

1. Verbindungselement (1) zum Verbinden benachbarter Anschlussabschnitte (2, 2') an Rohren und/oder Behältermündungen insbesondere an Laborgeräten, mit einer oder zwei die Anschlussabschnitte umfassenden Haltemanschetten (5, 5') und mit wenigstens zwei am Umfang der Haltemanschette (5) oder den Haltemanschetten (5, 5') angreifenden Befestigungselementen (6) zum lösbaren Verbinden und Anpressen Haltemanschette (5) an ein Wiederlagerelement (17) bzw. zum Anpressen der Haltemanschetten (5, 5') gegeneinander, wobei wenigstens eine der Haltemanschetten aus wenigstens zwei voneinander trennbaren Segmenten (9a, 9b) besteht, **dadurch gekennzeichnet, dass** die Segmente im geschlossenen Zustand durch die wenigstens zwei Befestigungselemente (6) derart zusammengehalten werden, dass durch Lösen eines einzigen der Befestigungselemente (6) wenigstens eine der Haltemanschetten soweit geöffnet werden kann, dass die Anschlussabschnitte voneinander getrennt werden können.

2. Verbindungselement nach Anspruch 1, **dadurch gekennzeichnet, dass** benachbarte Segmente (9a, 9b) sich gegenseitig überlappende Endabschnitte (10a, 10b, bzw. 10a', 10b') aufweisen, welche mit je einer Oeffnung (11) zum Ansetzen der Befestigungselemente versehen sind, wobei die Oeffnungen sich überlappender Endabschnitte im geschlossenen Zustand deckungsgleich verlaufen.

3. Verbindungselement nach Anspruch 1 oder 2, **dadurch gekennzeichnet, dass** die Befestigungselemente Schraubenbolzen (6) sind, welche die Haltemanschetten durchdringen und welche wenigstens mit einer Schraubenmutter versehen sind.

4. Verbindungselement nach Anspruch 3, **dadurch gekennzeichnet, dass** auf wenigstens einem Schraubenbolzen zwischen den Haltemanschetten (5, 5') eine Schraubendruckfeder (16) gelagert ist.

5. Verbindungselement nach Anspruch 2 und einem der Ansprüche 3 bis 4, **dadurch gekennzeichnet, dass** die Oeffnungen (11) in den sich überlappenden Endabschnitten radial gegen aussen hin durchgehend ausgebildet sind und dass die Schraubenbolzen ohne vollständiges Lösen der Verschraubung seitlich ausführbar sind.

6. Verbindungselement nach Anspruch 5, **dadurch gekennzeichnet, dass** die sich überlappenden Endabschnitte derart gelenkartig ineinandergreifen, dass sie nach dem Ausführen des gegenüberliegenden Schraubenbolzens um die Achse des verbleibenden Schraubenbolzens aufschwenkbar sind.

7. Verbindungselement nach Anspruch 2 und einem der Ansprüche 3 bis 6, **dadurch gekennzeichnet, dass** die sich überlappenden Endabschnitte im Bereich der Oeffnung (11) auf der Aussenseite und/oder auf der Innenseite mit einer Senkbohrung (12) versehen sind.

8. Verbindungselement nach Anspruch 2 und einem der Ansprüche 3 bis 7, **dadurch gekennzeichnet, dass** die Endabschnitte eines einzelnen Segments derart gegensinnig symmetrisch ausgebildet sind, dass identische aber seitenverkehrt zusammengefügte Segmente mit ihren überlappenden Endabschnitten formschlüssig zusammenpassen.

9. Verbindungselement nach einem der Ansprüche 1 bis 8, **dadurch gekennzeichnet, dass** die Haltemanschette drei vorzugsweise identisch ausgebildete Segmente (9a, 9b, 9c) aufweist, welche durch drei Befestigungselemente zusammengehalten sind.

10. Verbindungselement nach einem der Ansprüche 1 bis 9, **dadurch gekennzeichnet, dass** es zwei identisch ausgebildete Haltemanschetten (5, 5') aufweist.

11. Verbindungselement nach einem der Ansprüche 1 bis 9, **dadurch gekennzeichnet, dass** es nur eine Haltemanschette (5) mit trennbaren Segmenten (9a, 9b, 9c) aufweist und dass das Widerlager für die Befestigungselemente ein starres Widerlagerlement (17) ist.

## Claims

1. Joining element (1) for connecting adjacent sections for connection (2, 2') on pipes and/or container openings, in particular on laboratory equipment, with one or two holding collars (5, 5') that enclose the sections for connection, and with at least two fastening elements (6) that are applied to the circumference of the holding collar (5) or to the holding collars (5, 5'), to effect a detachable connection and contact pressure ofthe holding collar (5) to a counter-bearing element (17), or to effect contact pressure of the holding collars (5, 5') against one another, wherein at least one of the holding collars comprises at least two segments (9a, 9b) that can be separated from one another,
**characterised in that**
in the closed state, the segments are held together by the at least two fastening elements (6) in such a way that by releasing a single one ofthe fastening elements (6), at least one of the holding collars can be opened wide enough that the sections for connection can be separated from one another.

2. Joining element in accordance with claim 1, **characterised in that** adjacent segments (9a, 9b) have mutually overlapping end sections (10a, 10b or 10a', 10b') which are each equipped with an opening (11) for applying the fastening elements, wherein the openings of the overlapping end sections lie in a congruent position when in the closed state,

3. Joining element in accordance with claim 1 or 2, **characterised in that** the fastening elements are screw bolts (6) which penetrate through the holding collars and which are equipped with at least one screw nut.

4. Joining element in accordance with claim 3, **characterised in that** a helical pressure spring (16) is borne on at least one screw bolt between the holding collars (5, 5').

5. Joining element in accordance with claim 2 and one of the claims 3 to 4, **characterised in that** the openings (11) in the end sections that overlap one another are designed to run radially through in an outwards direction, and that the screw bolts can be taken out laterally without completely releasing the screw connection.

6. Joining element in accordance with claim 5, **characterised in that** the end sections that overlap one another engage into one another in a jointed manner, so that after the screw bolt lying opposite has been taken out, they can be pivoted open around the axis ofthe remaining screw bolt.

7. Joining element in accordance with claim 2 and one of the claims 3 to 6, **characterised in that** in the area of the opening (11), the end sections that overlap one another are equipped with a countersunk hole (12) on the outer side and/or on the inner side.

8. Joining element in accordance with claim 2 and one of the claims 3 to 7, **characterised in that** the end sections of an individual segment are designed to show opposite symmetry, so that segments which are identical but joined together laterally reversed, fit together with their overlapping end sections in a form-fitting manner.

9. Joining element in accordance with one of the claims 1 to 8, **characterised in that** the holding collar has three segments (9a, 9b, 9c) preferably of an identical design, which are held together by three fastening elements.

10. Joining element in accordance with one of the claims 1 to 9, **characterised in that** it has two holding collars (5, 5') of an identical design.

11. Joining element in accordance with one of the claims 1 to 9, **characterised in that** it has only one holding collar (5) with separable segments (9a, 9b, 9c), and that the counter-bearing for the fastening elements is a rigid counter-bearing element (17).

## Revendications

1. Elément de liaison (1) pour relier des sections de raccordement voisines (2, 2') à des tuyaux et/ou à des ouvertures de récipients, en particulier sur des appareils de laboratoire, comprenant un ou deux manchons de fixation (5, 5') qui entourent les sections de raccordement, et au moins deux éléments de fixation (6) qui agissent sur la circonférence du manchon (5) ou des manchons (5, 5') et qui sont destinés à relier de manière amovible et à serrer le manchon (5) contre un élément de butée (17) ou à serrer les manchons (5, 5') l'un contre l'autre, l'un au moins des manchons de fixation se composant d'au moins deux segments (9a, 9b) aptes à être séparés l'un de l'autre,
**caractérisé en ce que** les segments, en position fermée, sont réunis par les au moins deux éléments de fixation (6) de telle sorte que grâce au desserage d'un seul de ces éléments de fixation (6), l'un au moins des manchons de fixation puisse s'ouvrir suffisamment pour permettre de séparer les sections de raccordement l'une de l'autre.

2. Elément de liaison selon la revendication 1, **caractérisé en ce que** des segments (9a, 9b) voisins présentent des sections d'extrémité (10a, 10b et 10a', 10b') qui se chevauchent et qui sont pourvues chacune d'une ouverture (11) pour la mise en place des éléments de fixation, les ouvertures de sections d'extrémité qui se chevauchent coïncidant en position fermée.

3. Elément de liaison selon la revendication 1 ou 2, **caractérisé en ce que** les éléments de fixation sont des tiges filetées (6) qui traversent les manchons de fixation et qui sont pourvues d'au moins un écrou.

4. Elément de liaison selon la revendication 3, **caractérisé en ce qu'**un ressort de compression hélicoïdal (16) est monté sur au moins une tige filetée entre les manchons de fixation (5, 5').

5. Elément de liaison selon la revendication 2 et selon l'une des revendications 3 à 4, **caractérisé en ce que** les ouvertures (11) prévues dans les sections d'extrémité qui se chevauchent sont traversantes radialement vers l'extérieur, et **en ce que** les tiges filetées sont aptes à être enlevées latéralement sans desserrage total du vissage.

6. Elément de liaison selon la revendication 5, **caractérisé en ce que** les sections d'extrémité qui se chevauchent s'interpénètrent à la manière d'une charnière de telle sorte qu'après que la tige filetée opposée a été enlevée, elles soient aptes à pivoter autour de l'axe de la tige filetée restante pour s'ouvrir.

7. Elément de liaison selon la revendication 2 et selon l'une des revendications 3 à 6, **caractérisé en ce que** les sections d'extrémité qui se chevauchent sont pourvues dans la zone de l'ouverture (11), sur le côté extérieur et/ou sur le côté intérieur, d'un crevé (12).

8. Elément de liaison selon la revendication 2 et selon l'une des revendications 3 à 7, **caractérisé en ce que** les sections d'extrémité d'un segment individuel ont des formes symétriques, en sens inverse, de telle sorte que des segments identiques mais assemblés en sens inverse sont adaptés par complémentarité de forme, avec leurs sections d'extrémité qui se chevauchent.

9. Elément de liaison selon l'une des revendications 1 à 8, **caractérisé en ce que** le manchon de fixation comporte trois segments (9a, 9b, 9c) de préférence identiques qui sont réunis par trois éléments de fixation.

10. Elément de liaison selon l'une des revendications 1 à 9, **caractérisé en ce qu'**il comporte deux manchons de fixation (5, 5') identiques.

11. Elément de liaison selon l'une des revendications 1 à 9, **caractérisé en ce qu'**il ne comporte qu'un manchon de fixation (5) avec des segments (9a, 9b, 9c) séparables, et **en ce que** la butée pour les éléments de fixation consiste en un élément de butée rigide (17).
